# EUROPEAN PATENT SPECIFICATION

(11) **EP 2 789 850 B1**
(45) Date of publication and mention of the grant of the patent: **28.09.2016**
(21) Application number: 12856460.6
(22) Date of filing: 10.08.2012
(51) Int. Cl.: F03D 13/20

(54) **FLOATING TYPE WIND TURBINE GENERATION APPARATUS**
SCHWIMMENDE WINDKRAFTANLAGE
DISPOSITIF GÉNÉRATEUR D'ÉNERGIE ÉOLIENNE DU TYPE FLOTTANT

(30) Priority: 05.12.2011 JP 2011265666; 05.12.2011 JP 2011265667
(43) Date of publication of application: 15.10.2014
(73) Proprietor: Mitsubishi Heavy Industries, Ltd., Tokyo 108-8215 (JP)
(72) Inventor: MATSUSHITA, Takatoshi, Tokyo 108-8215 (JP); NUMAJIRI, Tomohiro, Tokyo 108-8215 (JP); KOMATSU, Masao, Tokyo 108-8215 (JP)
(74) Representative: Intès, Didier Gérard André
(86) International application number: PCT/JP2012/070494
(87) International publication number: WO 2013/084546

(56) References cited:
- JP-A- H09 309 486
- JP-A- S58 202 188
- JP-A- 2006 298 207
- JP-A- 2011 521 820
- US-A1- 2011 241 347

## Description

### TECHNICAL FIELD

This disclosure relates to a floating type wind turbine generating apparatus including a floating body floating on the water surface and a wind turbine generator installed on the floating body.

### BACKGROUND

In the case where a wind turbine generating apparatus is to be installed on the ocean and the like, a bottom-mounted type wind turbine generating apparatus is generally employed in a region where the water is shallow. A bottom-mounted type wind turbine generating apparatus includes a base disposed on the bottom of the water, and a wind turbine generator disposed on the base. However, in a region where the water is deep, the bottom-mounted type wind turbine generating apparatus is uneconomic. Therefore, a floating type wind turbine generating apparatus would be employed.

The floating type wind turbine generating apparatus includes a floating body floating on the water surface and a wind turbine generator installed on the floating body. Various types have been proposed for such a floating type wind turbine generating apparatus (Patent Documents 1 to 4).

### Citation List

### Patent Literature

Patent Document 1: JP2011-521820A
Patent Document 2: JP2001-165032
Patent Document 3: JP4743953B
Patent Document 4: JP2770449B
Patent Document 5: US 2011/241347 A1

Patent Document 5 discloses a floating wind energy generating device comprising at least two wind turbines mounted on a floating open structure, the floating open structure being moored to the seabed with a mooring system and being connectable to or disconnectable from the mooring system.

### SUMMARY

### Technical Problem

For the above described floating type wind turbine generating apparatus, it is necessary to perform regular maintenance such as check and replacement of the instruments even after mooring the floating type wind turbine generating apparatus on the ocean and the like. Thus, there is a need for a floating type wind turbine generating apparatus which can be easily accessed by a ship and the like without affected by the offshore conditions as little as possible. However, accessibility after having been moored on the ocean and the like is hardly taken into consideration for the floating type wind turbine generating apparatus in the above described prior art.

At least one embodiment of the present invention was made in view of the problems described above, and is to provide a floating type wind turbine generating apparatus which can be easily accessed by a ship and the like after having been moored on the ocean and the like.

### Solution to Problem

In order to achieve the above described object, in at least one embodiment of the present invention, a floating type wind turbine generating apparatus comprises:
a floating body including three columns having a quadratic prism shape and at least two lower hulls connecting two of the three columns; and
a wind turbine generator disposed on a top face of at least one of the three columns,
wherein the floating body is configured to be moored on a water surface in a state where a waterline is positioned above top faces of the lower hulls by injecting a ballast water inside; and
wherein an entrance is provided for a side face of at least one of the three columns, the entrance being disposed above a connection part between the lower hull and the at least one column, and configured to provide access inside the at least one column from a ship or a submarine.

In the floating type wind turbine generating apparatus installed on the water surface in the state where the waterline is positioned above the top faces of the lower hulls, the parts above the lower hulls are less likely to be affected by waves than other parts. Thus, by providing an entrance at the side face of the lower hull above the connection of the lower hull and the column, access to the floating type wind turbine generating apparatus by a ship or submarine would be facilitated.

Further, in the floating type wind turbine generating apparatus of one embodiment of the present invention, the floating body includes a water storage space inside the gloating body, the water storage space being configured capable of adjusting a stored volume of the ballast water.

With such storage space provided inside the floating body, it is possible to -adjust the height or depth of the entrance from the water surface appropriately for an accessing ship or submarine by adjusting the volume of the ballast water in the water storage space.

Further, in the floating type wind turbine generating apparatus of one embodiment of the present invention, the water storage space provided inside the floating body is divided into a plurality of auxiliary rooms in a longitudinal direction of each of the lower hulls, each of the auxiliary rooms being configured capable of taking in and discharging the ballast water.

With the water storage space divided into auxiliary rooms in the longitudinal direction of the lower hull, it is possible to prevent the floating body from being slanted considerably due to the imbalance of the gravity center of the floating body caused by the ballast water being accumulated in one direction inside the floating body. Also, as the plurality of auxiliary rooms is configured such that the ballast water is injected and discharged to and from each of the auxiliary rooms independently, it is possible to control the gravity center position of the floating body by appropriately adjusting the volume of the ballast water inside each of the auxiliary rooms.

Further, the floating type wind turbine generating apparatus in one embodiment of the present invention further includes an attitude detection sensor configured to detect an attitude of the floating body, wherein a volume of the ballast water stored in each of the auxiliary rooms is controlled based on a detected value of the attitude detection sensor.

With the above configuration, it is possible to control the attitude of the floating body with higher accuracy based on the detected value of the attitude detection sensor.

Further, in the floating type wind turbine generating apparatus of one embodiment of the present invention, a communication path is provided inside the floating body and configured to communicate between the three columns.

With the above communication path provided inside the floating body, it is possible for persons and objects to transfer between the columns even when the lower hulls are submerged. This communication path may include lifting means such as a ladder, stairs, and an elevator, or may include means for supporting conveyance of objects such as a crane.

Further, in the floating type wind turbine generating apparatus of one embodiment of the present invention, each of the three columns has at least one mooring cable connected thereto, and the mooring cable extends in such a direction that the mooring cable does not intersect with the lower hull and extends away from the lower hulls.

With the mooring cables connected to the columns extending in the above direction, the mooring cables do not interfere with access of a ship or submarine.

Further, in the floating type wind turbine generating apparatus of one embodiment of the present invention, the floating body includes a movable breakwater wall disposed so as to surround the entrance.

With the above breakwater wall, it is possible to reduce the influence of the surrounding environments on a ship or submarine accessing the entrance. The breakwater wall is configured movable so as not to interfere with the access of a ship or submarine.

Further, in the floating type wind turbine generating apparatus of one embodiment of the present invention, the entrance is configured to be positioned above the waterline while the floating body is moored, a pair of protrusions extending in a vertical direction is disposed on the side face of the column for which the entrance is provided, and the pair of the protrusions is arranged with an interval between each other so that a bow of a ship is housed between the protrusions, the ship being in a state where an end of the bow is in contact with the side face of the column.

With the pair of the protrusions disposed on the side face of the column, on which the entrance is provided, with an interval between each other so as to house the bow of a ship, it is possible to dock the ship to the shore by inserting the bow between the protrusions in the state where the ship is continuously being propelled. As a result, the influence by wave and the like on the ship is reduced, thereby facilitating the access to the entrance.

Further, in the floating type wind turbine generating apparatus of one embodiment of the present invention, the entrance comprises a hatch disposed so as to be positioned below the waterline while the floating body is moored, the hatch being configured such that a submarine is connectable.

With the hatch disposed on the side face of the column, it is possible for a submarine to access the entrance in the state of being submerged. The submarine is less affected by waves, which is advantageous in bad weather.

Further, in the floating type wind turbine generating apparatus of one embodiment of the present invention, the entrance is disposed so as to be positioned below the waterline while the floating body is moored and has a size that allows a submarine to pass through the entrance, and a storage room is formed inside the column, the storage room being configured capable of housing a submarine that has passed through the entrance.

With the above configuration, a submarine is capable of accessing the entrance in the state of being submerged, which is advantageous in bad weather. Also, as it is possible to house the submarine entirely in the housing room, it is possible to easily transfer a number of persons and cargos into the column.

### Advantageous Effects

According to at least one embodiment of the present invention, it is possible to provide a floating type wind turbine generating apparatus which can be easily accessed by a ship and the like after having been moored on the ocean and the like.

### BRIEF DESCRIPTION OF DRAWINGS

FIG. 1 is an oblique view of the floating type wind turbine generating apparatus according to one embodiment of the present invention in the state where the floating body is moored on the ocean.
FIG. 2 is a side view of the floating type wind turbine generating apparatus of FIG 1 as seen from aside.
FIG. 3 is a planar view of the arrangement of the mooring cables of the floating type wind turbine generating apparatus according to one embodiment of the present invention.
FIG. 4 is a planar view of the floating type wind turbine generating apparatus according to one embodiment of the present invention.
FIG. 5 is a cross-sectional view taken along line A-A of FIG. 4 as seen from aside.
FIG 6 is a cross-sectional enlarged view of the part "a" of FIG. 5.
FIG. 7 is a cross-sectional view of the communication path according to one embodiment of the present invention.
FIG. 8 is an oblique view of the pair of protrusions according to one embodiment of the present invention.
FIG. 9 is a planar view of the arrangement of the breakwater wall according to one embodiment of the present invention.
FIG 10 is a cross-sectional view of the storage room according to one embodiment of the present invention.
FIG. 11A is a side view, FIG 11B is a front view, and FIG. 11C is a top view of the guide part according to one embodiment of the present invention.
FIG 12A is a cross-sectional view of the stopper according to one embodiment of the present invention.
FIG. 12B is an oblique view of one embodiment of the wedge member.
FIG. 13 is a cross-sectional view of a part of the top face of the column according to one embodiment of the present invention.
FIG. 14 is an illustration of the state where the floating type wind turbine generating apparatus is being towed.
FIGs. 15A is an illustration of the step of fixing the anchor to the predetermined position on the bottom of the water, and FIG. 15B is an illustration of the step of connection the mooring cable and the floating body.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

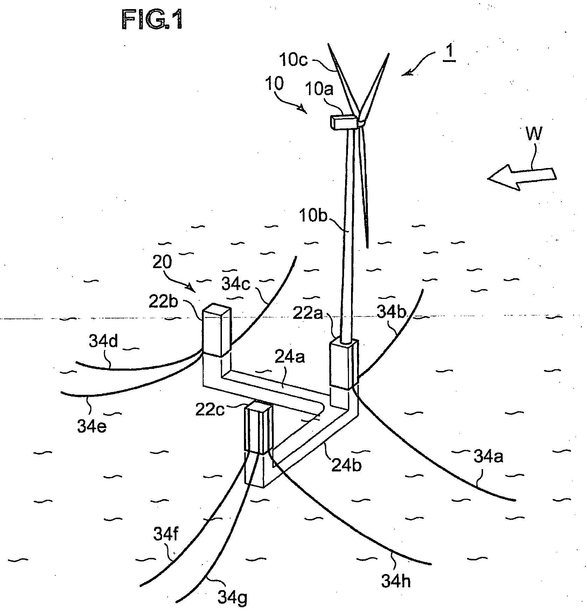

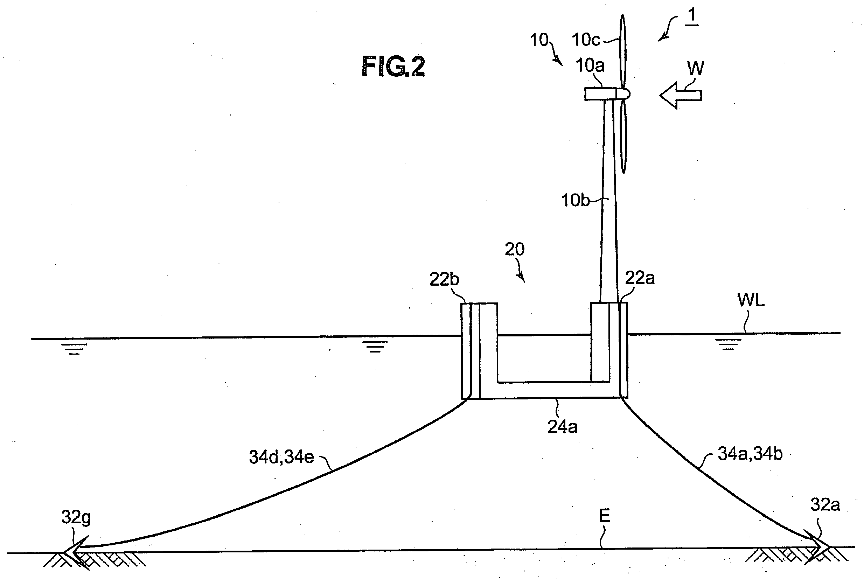

FIG. 1 is an oblique view of the floating type wind turbine generating apparatus according to one embodiment of the present invention in the state where the floating body is moored on the ocean. FIG. 2 is a side view of the floating type wind turbine generating apparatus of FIG. 1 as seen from aside.

As show in FIGs. 1 and 2, the floating type wind turbine generating apparatus 1 according to the present invention includes a floating body 20 floating on the water surface and a wind turbine generator 10 disposed on the floating body 20.

As shown in FIGs. 1 and 2, the wind turbine generator 10 includes a nacelle 10a, a tower 10b disposed standing upright on the top face of the first column 22a, and a blade 10c rotatably mounted to the nacelle 10a. The nacelle 10a is supported by the tower 10b so as to be rotatable around the axial direction of the tower 10b. The nacelle 10a orients the blade 10c to the upwind side in accordance with the wind direction. By the blade 10c rotating upon receiving wind, power generation is performed by the generator not shown in the drawings.

As shown in FIG. 1, the floating body 20 includes three columns 22 (22a, 22b, 22c) having a quadratic prism shape and disposed on the vertex positions of the virtual triangle in the planar view. Also, the floating body 20 includes the first lower hull 24a of an elongated shape connecting the first column 22a and the second column 22b, and the second lower hull 24b of an elongated shape connecting the first column 22a and the third column 22c. Accordingly, the floating body 20 is formed into a substantially V-shape in the planar view by the three columns 22 and two lower hulls 24. The above described wind turbine generator 10 is disposed on the top face of the first column 22a positioned in the middle of the substantially V-shape in the planar view.

In one embodiment of the present embodiment, the first lower hull 24a and the second lower hull 24b are mutually orthogonal. The above described three columns 22 are disposed on the vertex positions of the virtual isosceles right triangle which is symmetric about the bisector of the intersecting angle between the first lower hull 24a and the second lower hull 24b.

Further in one embodiment of the present embodiment, although not specifically shown in the drawings, the third lower hull may be further provided connecting the second column 22b and the third column 22c. Also, the first lower hull 24a and the second lower hull 24b may be connected to each other by a reinforcing beam member.

Further, as described below, the floating body 20 includes a water storage space inside, which stores the ballast water. By injecting the ballast water into the water storage space, the floating body 20 is moored on the water surface in the state where the water line WL is positioned above the top faces of the lower hulls 24.

Further, as shown in FIGs. 1 and 2, the floating body 20 is arranged so that the first column 22a is positioned on the upwind side in the main wind direction W. The wind turbine generator 10 is installed on the top face of the first column 22a. On the other hand, the second column 22b and the third column 22c are arranged to be positioned on the downwind side with respect to the first column 22a in the main wind direction W. It is possible to increase stability of the wind turbine generator 10, which may lean to the back side upon receiving wind load, by arranging the first column 22a on which the wind turbine generator 10 is installed on the upwind side in the main wind direction W.

Further, as shown in FIG. 2, a plurality of mooring cables 34 is connected to the floating body 20 in a catenary curve so as to show catenary curves. The mooring cables 34 are connected to the anchors 32 fixed on the bottom E of the water. The floating body 20 is moored on the ocean by the anchors 32 and the mooring cables 34, resisting the drift force and rotational moment acting on the floating body 20.

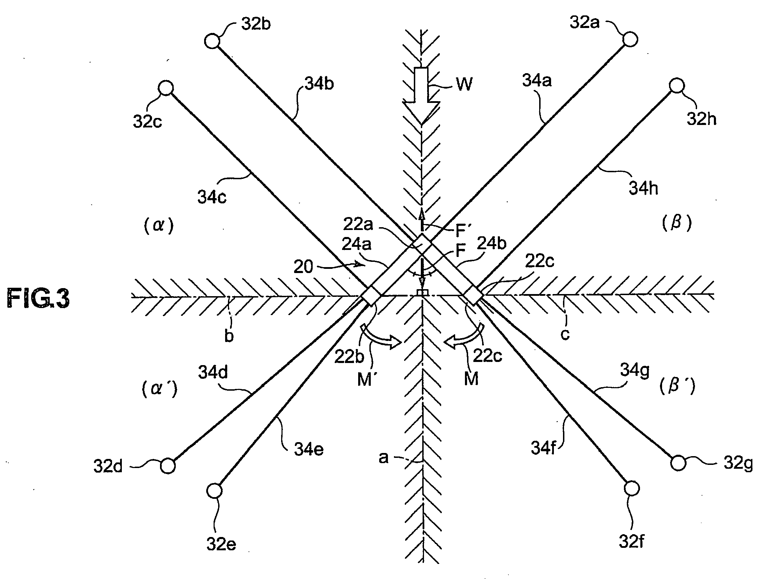

FIG. 3 is a planar view of the arrangement of the mooring cables of the floating type wind turbine generating apparatus according to one embodiment of the present invention.

As shown in FIG. 3, in one embodiment of the present invention, two mooring cables 34a, 34b are connected to the first column 22a. The two mooring cables 34a, 34b extend respectively in the directions along the axial directions of the first lower hull 24a and the second lower hull 24b. Also, three mooring cables 34c, 34d, 34e and three mooring cables 34f, 34g, 34h are respectively connected to the second column 22b and the third column 22c. In this manner, the floating body 20 as a whole includes 8 mooring cables 34a to 34h in total connected thereto. Each of the 8 mooring cables 34 is arranged to radially extend from the floating body 20 so as not to intersect with one another in the planar view.

In one embodiment of the present invention, at least two mooring cables 34 are connected to the first column 22a disposed on the upwind side in the main wind direction W, while at least one mooring cable 34 is connected to each of the second column 22b and third column 22c disposed on the downwind side in the main direction W. With this configuration, the at least two mooring cables 34 connected to the first column 22a resist the drift force F in the main wind direction W acting on the floating body 20, while the at least one mooring cable 34 connected to each of the second column 22b and the third column 22c resists the drift force F' in the other directions and the rotational moment M, M' around the first column 22a acting on the floating body 20. As a result, the floating body 20 is stably moored against the drift force F, F' and rotational moment M, M' acting on the floating body 20.

Further, in one embodiment of the present invention, as shown in FIG. 3, the at least one mooring cable 34 connected to the second column 22b includes the mooring cable 34c (rotation preventing mooring cable) which extends toward the region α on the first column 22a side. The region α is defined by the bisector "a" of the intersection of the first lower hull 24a and the second lower hull 24b, and the straight line "b", which is orthogonal to the bisector "a" and passes through the center of the second column 22b. Similarly, the at least one mooring cable 34 connected to the third column 22c includes the mooring cable 34h (rotation preventing mooring cable) which extends toward the region β on the first column 22a side. The region β is defined by the bisector "a" and the straight line "c", which is orthogonal to the bisector "a" and passes through the center of the third column 22c. In this manner, the mooring cables 34 (rotation preventing mooring cable) connected to the second column 22b and the third column 22c extend in the direction such that the mooring cables 34 effectively resist the rotational moment M, M' around the first column 22a. As a result, the floating body 20 is stably moored.

At this time, by the mooring cables 34 (rotation preventing mooring cable) that extend toward the above described region α and region β also extending in the direction orthogonal to the axial direction of the lower hull 24a and the lower hull 24b, similarly to the mooring cable 34c and the mooring cable 34h shown in FIG. 3, the floating body 20 would be even more stably moored because in this manner the mooring cables 34 extend in the direction 180 degrees opposite to the tangent line of the rotational force when the floating body 20 is about to rotate around the first column 22, which makes it possible for the mooring cables 34 to resist the rotational moment M, M' more effectively.

Also at this time, by a plurality of the mooring cables 34 being connected to each of the second column 22b and the third column 22c as shown in FIG. 3, it is possible to moor the floating body 20 even more stably against the drift force F, F' or the rotational moment M, M' acting on the floating body 20, as well as to prevent the floating body 20 from immediately becoming unstable due to the drift force F, F' or the rotational moment M, M' even when one of the mooring cables 34 is cut off.

Also at this time, when a plurality of the mooring cables 34 are connected to each of the second column 22b and the third column 22c as described above, the mooring cables 34 (34d, 34e, 34f, 34g) may be connected along the axial directions of the lower hulls 24, extending toward the region α' and region β' on the opposite side of the first column 22a beside the mooring cables 34 (34c, 34h) extending in the direction orthogonal to the axial directions of the lower hulls 24. By connecting such mooring cables 34 (34d, 34e, 34f, 34g) to the second column 22b and the third column 22c, the floating body 20 would be stably moored particularly against the drift force F' in the direction opposite to the main wind direction W.

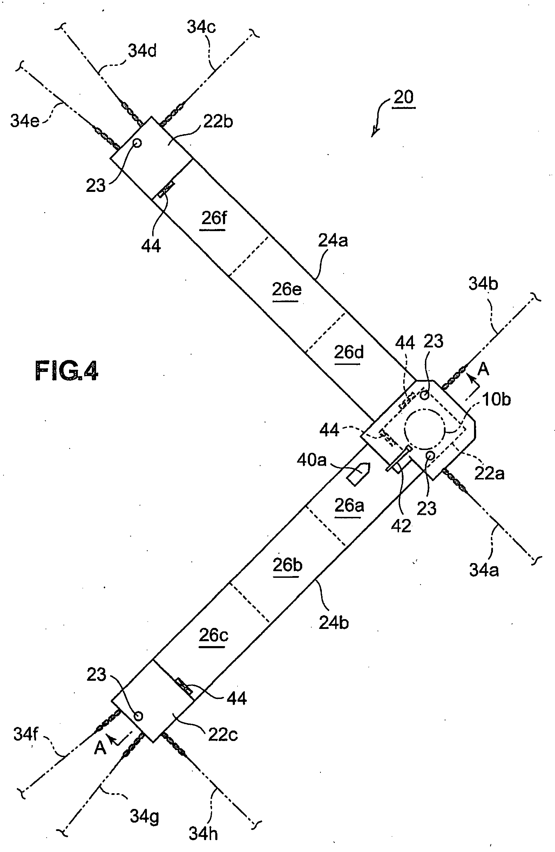

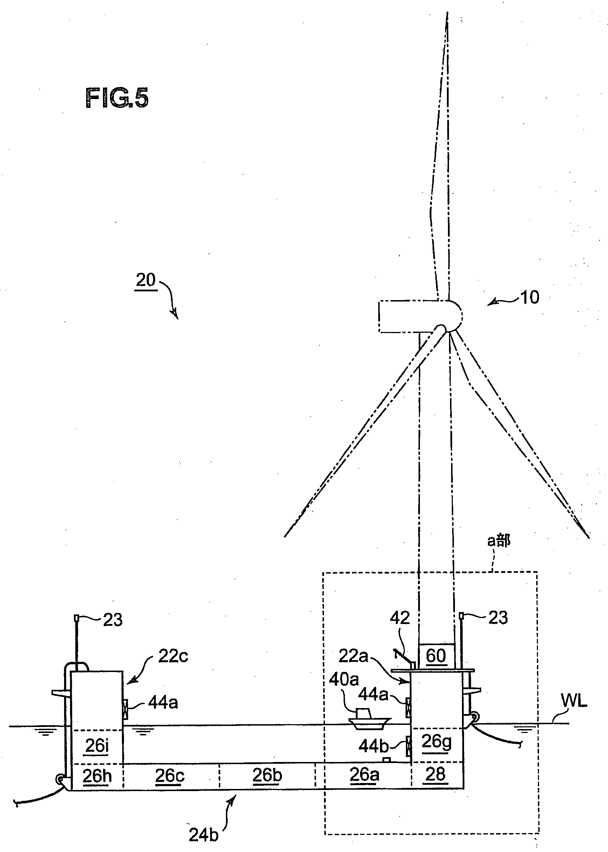

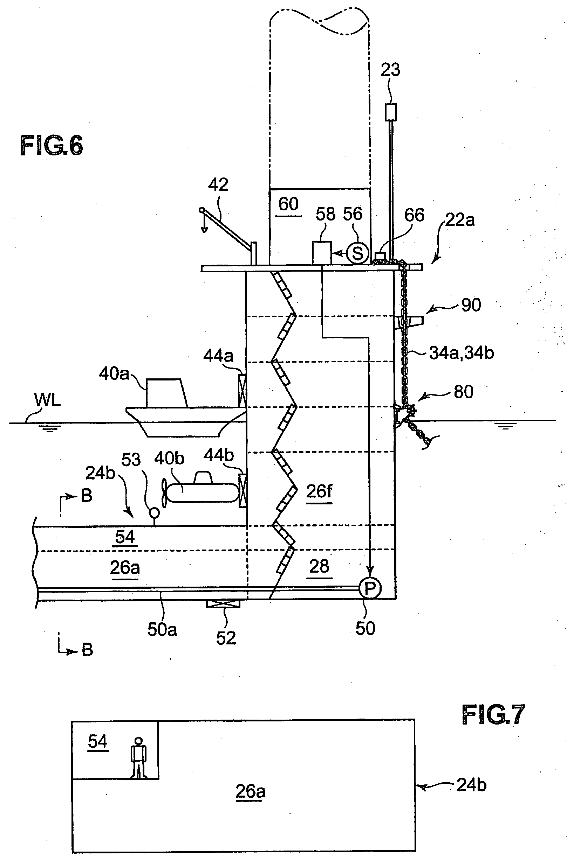

FIG. 4 is a planar view of the floating type wind turbine generating apparatus according to one embodiment of the present invention. FIG. 5 is a cross-sectional view taken along line A-A of FIG. 4. FIG. 6 is a cross-sectional enlarged view of the part "a" of FIG. 5. FIG. 7 is a cross-sectional view taken along line B-B of FIG. 6.

The above described column 22 and lower hull 24 have a cross-section of a hollow shape. As shown in FIGs. 4 and 5, a water storage space for storing the ballast water is formed inside the column 22 and the lower hull 24.

In one embodiment of the present invention, the water storage space formed inside the lower hull 24 is divided into a plurality of auxiliary rooms (water storage rooms) 26 in the longitudinal direction of the lower hull 24. For instance, as shown in FIGs. 4 and 5, three auxiliary rooms (26a~26c and 26d~26f) are formed in the longitudinal direction inside the first lower hull 24a and the second lower hull 24b.

As shown in FIG. 5, two auxiliary rooms 26i, 26h are formed inside the third column 22c by being divided in the vertical direction. Although not shown, two auxiliary rooms are similarly formed inside the second column 22b by being divided in the vertical direction.

A pump chamber 28 is formed inside the first column 22a beside the water storage room 26g. As shown in FIG. 6, a pump 50 is disposed inside the pump chamber 28. The pump 50 is connected to each of the auxiliary rooms 26 of the water storage room 26 via a discharging pipe 50a. By driving the pump 50, it is possible to discharge the ballast water stored inside each of the auxiliary rooms 26 outside the floating body 20 as well as to transfer the ballast water stored in each of the auxiliary rooms 26 to another one of the auxiliary rooms 26.

Also shown in FIG. 6, a gate 52 is provided for each of the auxiliary rooms 26, by which the auxiliary rooms 26 is communicated to or shut from outside. The gate 52 is disposed below the waterline as of the time before the floating body 20 is sunk underwater so as to facilitate injection of the ballast water from outside. Also, an air valve 53 is disposed on the upper part of each of the auxiliary rooms 26. When the gate 52 is opened, the air inside the auxiliary room 26 is discharged from the air valve 53 and the ballast water is injected into the auxiliary room 26.

As described above, in one embodiment of the present invention, it is possible to inject and discharge the ballast water to and from not only the water storage room 26 as a whole but also a plurality of the auxiliary rooms 26 using the above described pump 50, discharge pipe 50a, gate 52, and air valve 53.

As described above, the water storage room 26 capable of adjusting the stored volume of the ballast water is provided inside the floating body 20. As a result, it is possible to adjust the volume of the ballast water to change the degree of sinking of the floating body 20, and thus to appropriately adjust the degree of sinking for the floating body 20 so as to stabilize the floating body 20 against the drift force F, F' and the rotational moment M, M'.

Further, as the water storage space 26 is divided into a plurality of auxiliary rooms 26 in the longitudinal direction of the lower hull 24, it is possible to prevent the floating body 20 from slanting considerably due to the imbalance of the gravity center of the floating body 20 caused by the ballast water being accumulated in one direction inside the floating body 20. Also, as a plurality of auxiliary rooms 26 is configured such that the ballast water is injected and discharged to and from each of the auxiliary rooms 26 independently, it is possible to control the gravity center position of the floating body 20 by appropriately adjusting the volume of the ballast water inside each of the auxiliary rooms 26.

It is difficult for the floating body 20 with the lower hulls 24 entirely under the water to return to the original attitude once it is slanted by external force such as waves acting thereon. Thus, the present configuration, in which the water storage room 26 inside the lower hulls 24 is divided into a plurality of the auxiliary rooms 26 in the longitudinal direction, is effective in securing the stability of the floating body 20.

In one embodiment of the present invention, as shown in FIG. 6, an attitude detection sensor 56 for detecting the slant of the floating body 20 and a controller 58 for controlling operation of the above described pump 50 are disposed in an electric room 60 provided at the base of the tower 10b. When the attitude detection sensor 56 detects a slant of the floating body 20 greater than a predetermined value, the pump 50 starts to operate. As a result, the volume of the ballast water is automatically controlled so that the floating body 20 becomes horizontal again.

In one embodiment of the present invention, as shown in FIG. 7, a communication path 54 is formed inside the lower hull 24. The communication path 54 is watertightly separated from the auxiliary room 26 where the ballast water is stored. The communication path 54 may be constituted of a pipe. The communication path 54 allows persons and objects to transfer between the columns 22 even when the ballast water is stored in the auxiliary room 26.

Also, as shown in FIGs. 4 and 5, a beacon light 23 is disposed on the top face of the column 22, serving to signal the existence of the installation for ships passing by.

In one embodiment of the present invention, as shown in FIGs. 4 and 5, an entrance 44 for providing access inside the columns 22 is provided for the side face of the columns 22. When transferring persons or objects to the floating type wind turbine generating apparatus 1 moored on the ocean and the like, the persons or objects are transferred to the floating type wind turbine generating apparatus 1 from the land by a ship 40a or a submarine 40b and then access the inside of the column 22 from the entrance 44.

The above described entrance 44 is disposed above the connection between the column 22 and the lower hull 24. The water depth from the water surface to the part above the lower hull 24 is shallow compared to that from the water surface to other parts. Thus, the part above the lower hull 24 is less affected by the waves. Therefore, by disposing the entrance 44 on the side face of the column 22 above the connection part between the column 22 and the lower hull 24, access to the floating type wind turbine generating apparatus 1 by the ship 40a or the submarine 40b is facilitated.

Further, as shown in FIG. 4, the above described mooring cables 34 extend in such a direction that the mooring cables 34 extend away from the lower hull 24 and do not intersect with the lower hull 24. Thus, the mooring cables 34 do not interfere with the access of the ship 40a or the submarine 40b to the entrance 44 of the floating type wind turbine generating apparatus 1.

Further, as shown in FIGs. 5 and 6, a hoisting device 42 such as a crane is disposed on the top face of the column 22 above the entrance 44. By providing the hoisting device 42 above the entrance 44, it is possible to easily perform the work for carrying the cargo on the ship 40a into the column 22.

In one embodiment of the present invention, as shown in FIGs. 5 and 6, an entrance 44a is disposed to on such a position that becomes above the waterline WL in the state where the lower hull 24 is entirely underwater. By providing the entrance 44a above the waterline WL, the access to the inside of the column 22 by the ship 40a is facilitated.

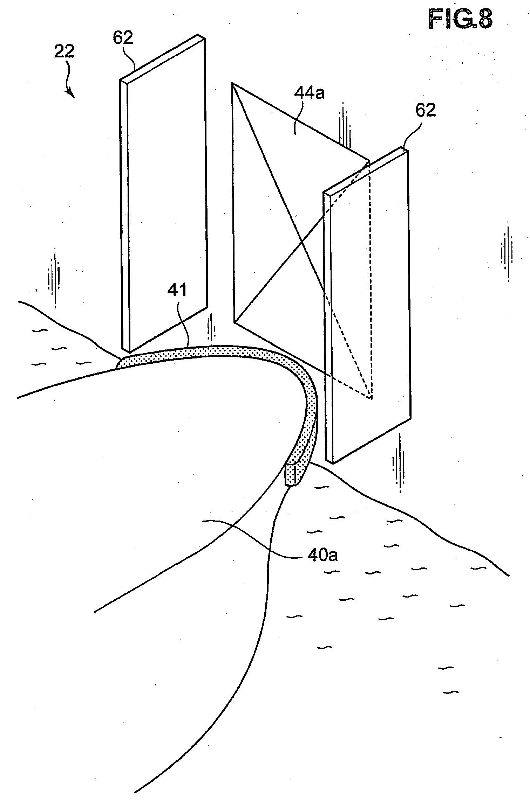

In one embodiment of the present invention, as shown in FIG. 8, a pair of protrusions 62, 62 extending in the vertical direction is disposed to protrude from the side face of the column 22 for which the entrance 44a is provided. The pair of the protrusions 62, 62 is arranged with an interval between each other so that the bow of the ship 40a is housed between the protrusions, the ship being in the state where the end of the bow is in contact with the side face of the column 22. An elastic member 41 such as rubber is attached to the bow of the ship 40a to protect the bow.

With the above pair of the protrusions 62 disposed on the side face of the column 22, it is possible to dock the ship 40a to the shore by inserting the bow between the protrusions 62 in the state of the ship 40a being propelled. As a result, the influence by the wave and the like on the ship 40a is reduced, thus facilitating the access to the entrance 44a.

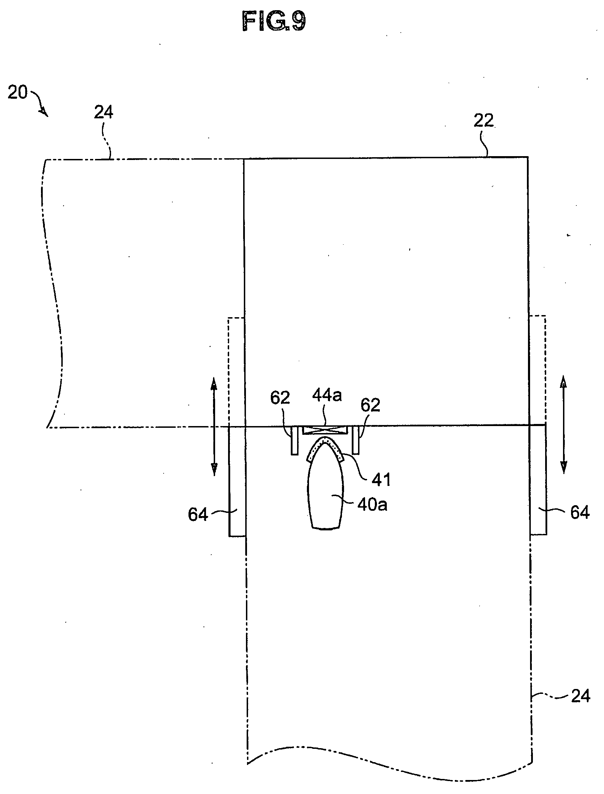

In one embodiment of the present invention, as shown in FIG. 9, a breakwater wall 64 is disposed so as to surround the entrance 44a of the floating body 20. The breakwater wall 64 is configured movable so as not to interfere with the access of the ship 40a. The breakwater wall 64 is normally disposed on the position where the breakwater wall 64 does not interfere with the access of the ship 40a, for instance, along the side face of the column 22, and is configured to move so as to surround the entrance 44a when the ship 40a is in contact with the side face of the column 22. As a result, the breakwater wall 64 serves to restrain swaying of the ship 40a due to the waves.

In one embodiment of the present invention, as shown in FIGs. 5 and 6, an entrance 44b is disposed below the waterline WL of the state where the lower hull 24 is entirely underwater. In one embodiment, the entrance 44b is configured as a hatch to which a submarine 40b is connectable in the state of being watertight as shown in FIG. 6.

With such entrance 44b disposed on the side face of the column 22, it is possible for the submarine 40b to access the entrance 44b in the state of being submerged. The submarine 40b navigating underwater is less affected by waves, which is advantageous when accessing the floating type wind turbine generating apparatus 1 during bad weather.

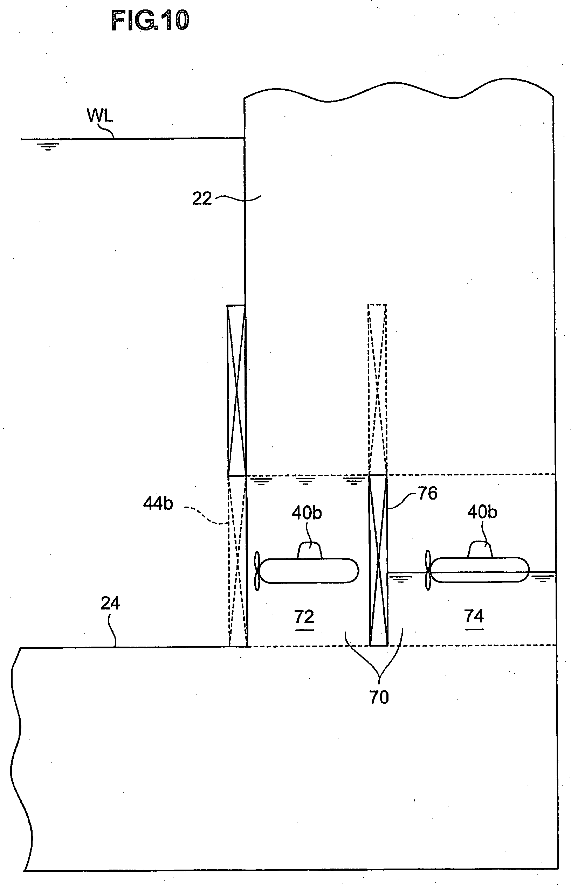

In one embodiment of the present invention, as shown in FIG 10, the entrance 44b is disposed so as to position below the waterline WL while the floating type wind turbine generating apparatus 1 is being moored, and formed into the size that allows the submarine 40b to pass through the entrance 44b. A storage room 70 is formed inside the column 22, which is capable of housing the submarine 40b that has passed through the entrance 44b.

The storage room 70 includes the first room 72 separated from outside by the entrance 44b and the second room 74 separated from the first room 72 by the water blocking gate 76. Once the submarine 40b enters the first room 72 via the entrance 44b, the entrance 44b is closed. Then, by opening the water blocking gate 76 while the entrance 44b is closed, it is possible for the submarine 40b to enter the pool formed inside the second room 74.

With the above storage room 70 formed inside the column 22, it is possible for the submarine 40b to access the entrance 44b while being continuously submerged, which is advantageous during bad weather. Also, since it is possible to house the entire submarine 40b in the storage room 70, it is possible to easily transfer a number of persons and cargos into the column 22.

In one embodiment of the present invention, as shown in FIG. 6, a guide part 80 for guiding the mooring cables 34a, 34b along the side face of the first column 22a is disposed on the side face of the first column 22a. Also, a stopper 90 for preventing the mooring cables 34a, 34b guided by the guide part 80 from falling downward is disposed above the guide part 80. Moreover, a pressing member 66 for pressing and fixing the mooring cables 34a, 34b is disposed on the top face of the first column 22a. One guide part 80, stopper 90, and pressing member are provided for each corresponding one of the mooring cables connected to each of the three columns 22.

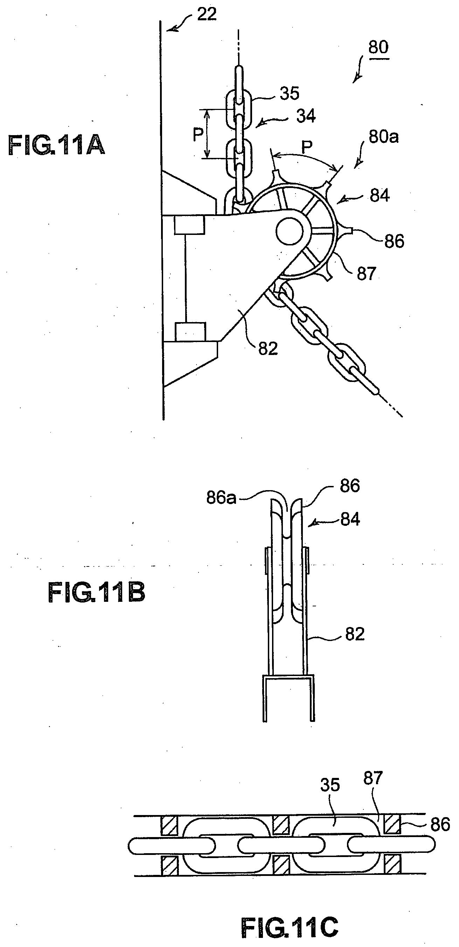

FIG. 11A is a side view, FIG. 11B is a front view, and FIG. 11C is a top view of the guide part according to one embodiment of the present invention.

As shown in FIGs. 11A to 11C, the guide part 80 according to one embodiment of the present invention comprises a fairlead 80a arranged so that the mooring cable 34 is held between the fairlead 80a and the side face of the column 22. Also, the mooring cable 34 has a chain shape where a plurality of ring members 35 are linked, the ring members 35 being arranged alternately in the longitudinal and lateral direction.

The fairlead 80a includes a pair of supporting members 82 protruding from the side face of the column 22 and a rotating body 84 which is rotatably supported between the pair of the supporting members 82. A plurality of projections 86 is formed on the outer circumference of the rotating body 84 with a pitch corresponding to the length of the ring member 35, for instance, a pitch corresponding to the distance P between the centers of the ring members 35 that are distanced by one ring member in between as shown in FIG. 11. A slit 86a is provided for the projection 86 at the center part as seen from the front as shown in FIG. 11B. The ring member 35 arranged in the longitudinal direction with respect to the rotating body 84 is inserted into the slit 86a. Also, as shown in FIG. 11C, the ring member 35 arranged in the lateral direction with respect to the rotating body 84 is housed in the flat portion 87 between the adjacent projections 86 on the outer circumference of the rotating body 84. By the ring member 35 being inserted into the slit 86a of the projection 86, the mooring cable 34 is guided along the side face of the column 22 in the vertical direction.

With the above described guide part 80 and fairlead 80a, the mooring cable 34 extending slantwise from the anchor 32 toward the side face of the column 22 in catenary curve is smoothly guided along the side face of the column 22 in the vertical direction. Also, by the ring member 35 being inserted into the slit 86a of the projection 86 formed on the outer circumference of the rotating member 84 of the fairlead 80a, the mooring cable 34 is securely guided without misalignment.

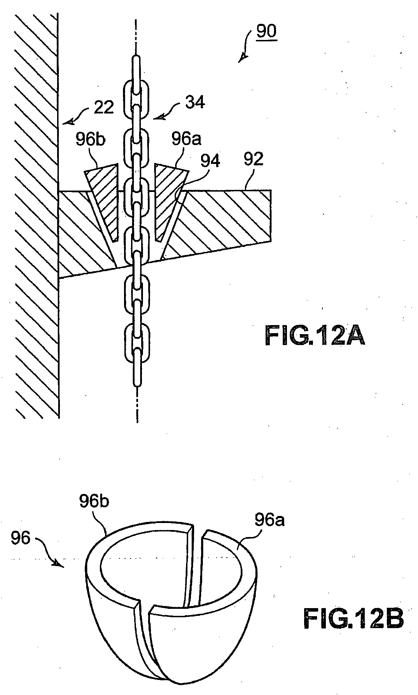

FIG. 12A is a cross-sectional view of the stopper according to one embodiment of the present invention.

As shown in FIG. 12A, the stopper 90 includes a protruding member 92 protruding from the side face of the column 22 and wedge members 96a, 96b having a wedge shape.

As also shown in FIG. 12A, a through-hole 94 is formed on the protruding member 92, whose opening increases upward in size, and the mooring cable 34 is inserted through the through-hole 94. In the state where the mooring cable 34 is inserted through the through-hole 94, the wedge members 96a, 96b are fit into the through-hole 94 from above. As a result, by the so-called wedge effect, the mooring cable 34 is fixed by the frictional force between the mooring cable 34 and the wedge members 96a, 96b to prevent the mooring cable 34 from falling down.

In one embodiment of the present invention, as a wedge member 96, wedge members 96a, 96b are suitably used, which are formed by halving a cup-shape member having a shape that can be fit into the through-hole 94 from above as shown in FIG. 12B.

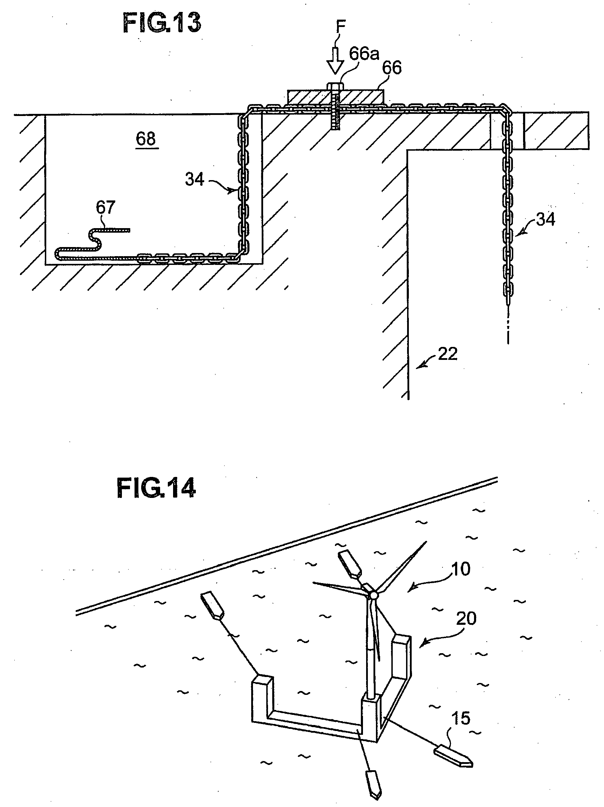

FIG 13 is a cross-sectional view of a part of the top face of the column according to one embodiment of the present invention.

As shown in FIG. 13, a pressing member 66 is disposed on the top face of the column 22 fixed onto the top face of the column 22 by a bolt 66a in the state where the mooring cable 34 is held between the pressing member 66 and the top face of the column 22. The mooring cable 34 is forced against the top face of the column 22 by the pressing member 66 with the predetermined pressing force F. With such pressing member 66 being provided, the mooring cable 34 guided along the side face of the column 22 is fixed onto the top face of the column 22. As a result, it is possible to prevent the end of the mooring cable 34 from moving freely.

As shown in FIG. 13, a housing space 68 for housing the mooring cable 34 is provided inside the column 22. The housing space 68 has its opening formed on the top face of the column 22 and houses an extra part at the end of the mooring cable 34 fixed by the pressing member 66.

A rope 67 is connected to the end of the mooring cable 34 at the side connected to the column. By connecting the rope 67 to the end of the mooring cable 34, it would be easier to handle the mooring cable 34 in the case where the mooring cable 34 is arranged along the side face of the column 22 via the guide part 80 and the like.

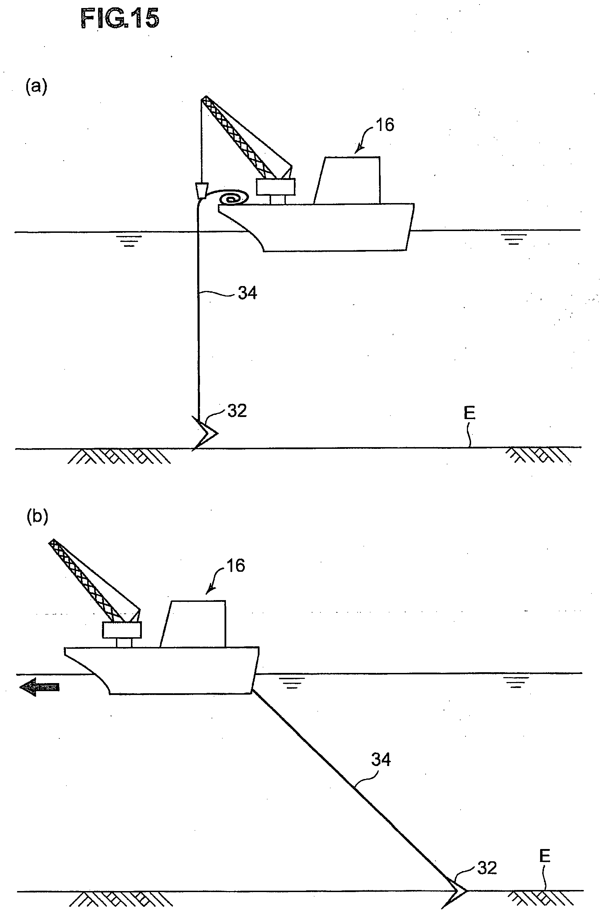

Next, a mooring method for the floating type wind turbine generating apparatus 1 with the above configuration will be described in accordance with FIGs. 14 to 16. FIG. 14 is an illustration of the state where the floating type wind turbine generating apparatus is being towed. FIG. 15A is an illustration of the step of fixing the anchor to the predetermined position on the bottom of the water. FIG. 15B is an illustration of the step of connecting the mooring cable and the floating body.

In the mooring method of the floating type wind turbine generating apparatus 1 according to at least one embodiment of the present invention, the floating body 20 is assembled in the state of being on the land or in contact with the shore. The wind turbine generator 10 is installed on the floating body 20. Then, as shown in FIG. 14, the floating body 20 is towed to the prescribed mooring position on the ocean by four towing ships 15, for instance.

Further, as shown in FIG. 15A, a ship other than the floating body 20, a crane vessel 16 for instance, is used to sink the anchor 32 connected to the above described mooring cable 34 to a predetermined position on the bottom of the water (sinking step). Then, as shown in FIG. 15B, the crane vessel 16 is used to tow the mooring cable 34 to fix the sunken anchor 32 to the bottom of the water (towing step).

In the towing step, based on the output torque of the power supply for towing the mooring cable 34 or the tension of the mooring cable 34 being towed, the holding power of the mooring cable 34 is measured. As a result, it is possible to easily measure the holding power of the mooring cable 34 and thus to easily determine whether the anchor 32 is appropriately fixed on the bottom of the water.

Then, the sinking step and towing step are iterated for each of the mooring cables 34 to fix the anchors 32 of the mooring cables 34 to the predetermined position on the bottom of the water. At this time, by coupling the mooring cables 34 together and towing the coupled mooring cables 34 collectively by the crane vessel 16, it is possible to fix the sunken anchors collectively on the bottom of the water. As a result, it is possible to reduce the number of the towing operations, thereby increasing efficiency of the mooring process and reducing the cost.

After having fixed the anchors 32 to the bottom of the water by the crane vessel 16, the rope 67 connected to the end of the mooring cable 34 is attached to a buoy, which is then floated on the prescribed mooring position. Then, the mooring cables 34 attached to the buoys is retrieved by the floating body 20 towed to the prescribed mooring position, and the retrieved mooring cables 34 are connected to the columns 22 as shown in the above described FIG. 3. Finally, by injecting the ballast water into the water storage space inside the floating body 20, the floating type wind turbine generating apparatus 1 is moored on the ocean and the like in the state where the waterline WL is positioned above the top face of the lower hull 24.

According to the above mooring method of the floating type wind turbine generating apparatus 1, it is possible to fix the anchors 32 on the predetermined position on the bottom of the water and connect the floating body 20 and the anchors 32 by the mooring cables 34 without providing a crane for the floating body 20 itself. As a result, it is possible to enhance efficiency of the mooring process and to reduce the cost of the mooring process.

Embodiments of the present invention were described in detail above, but the present invention is not limited thereto, and various amendments and modifications may be implemented within a scope that does not depart from the present invention.

### Industrial Applicability

The present invention is applicable to a floating type wind turbine generating apparatus installed on the ocean and the like.

### Reference Signs List

- 1: Floating wind turbine generating apparatus
- 10: Wind turbine generator
- 10a: Nacelle
- 10b: Tower
- 10c: Blade
- 15: Towing ship
- 16: Crane vessel
- 20: Floating body
- 22: Column
- 23: Beacon light
- 24: Lower hull
- 26: Water storage room
- 29: Pump chamber
- 32: Anchor
- 34: Mooring cable
- 35: Ring member
- 40a: Ship
- 40b: Submarine
- 41: Elastic member
- 42: Hoisting device
- 44: Entrance
- 50: Pump
- 50a: Discharging pipe
- 52: Gate
- 53: Air valve
- 54: Communication path
- 56: Attitude detection sensor
- 58: Controller
- 60: Electrical room
- 62: Protrusion
- 64: Breakwater wall
- 66: Pressing part
- 67: Rope
- 68: Housing space
- 70: Storage room
- 72: First room
- 74: Second room
- 76: Water blocking gate
- 80: Guide part
- 81a: Fairlead
- 82: Supporting member
- 84: Rotating body
- 86: Projection
- 86a: Slit
- 87: Flat portion
- 90: Stopper
- 92: Protruding member
- 94: Through-hole
- 96: Wedge member

## Claims

1. A floating type wind turbine generating apparatus (1) comprising:
a floating body (20) including three columns (22a,22b,22c) having a quadratic prism shape and at least two lower hulls (24) connecting two of the three columns; and
a wind turbine generator (10) disposed on a top face of at least one (22a) of the three columns,
wherein the floating body is configured to be moored on a water surface in a state where a waterline (WL) is positioned above top faces of the lower hulls (24) by injecting a ballast water inside; and
an entrance (44) is provided for a side face of at least one of the three columns, the entrance (44) being disposed above a connection part between the lower hull (24) and the at least one column (22a), and configured to provide access inside the at least one column from a ship (40a) or a submarine (40b).

2. The floating type wind turbine generating apparatus according to claim 1, wherein the floating body (20) includes a water storage space (26) inside the floating body, the water storage space being configured to adjust a stored volume of the ballast water.

3. The floating type wind turbine generating apparatus according to claim 2, wherein the water storage space provided inside the floating body is divided into a plurality of auxiliary rooms (26) in a longitudinal direction of each of the lower hulls (24), each of the auxiliary rooms (26) being configured to take in and discharge the ballast water.

4. The floating type wind turbine generating apparatus according to claim 1 to 3, comprising
an attitude detection sensor (56) configured to detect an attitude of the floating body (20), wherein a volume of the ballast water stored in each of the auxiliary rooms (26) is controlled based on a detected value of the attitude detection sensor.

5. The floating type wind turbine generating apparatus according to claim 1 to 4, comprising
a communication path (54) provided inside the floating body (20) and configured to communicate between the three columns (22a,22b,22c).

6. The floating type wind turbine generating apparatus according to claim 1 to 5,
wherein each of the three columns (22a,22b,22c) has at least one mooring cable (34) connected thereto, and
wherein the at least one mooring cable (34) extends in such a direction that the at least one mooring cable (34) does not intersect with the lower hull (24) and extends away from the lower hulls (24).

7. The floating type wind turbine generating apparatus according to claim 1 to 6,
wherein the floating body (20) includes a movable breakwater wall (64) disposed so as to surround the entrance (44).

8. The floating type wind turbine generating apparatus according to claim 1 to 7,
wherein the entrance (44a) is configured to be positioned above the waterline (WL) while the floating body (20) is moored,
wherein a pair of protrusions (62) extending in a vertical direction is disposed on the side face of the column (22a) for which the entrance (44) is provided, and
wherein the pair of the protrusions (62) is arranged with an interval between each other so that a bow of the ship (40a) is housed between the protrusions (62), the ship (40a) being in a state where an end of the bow is in contact with the side face of the column.

9. The floating type wind turbine generating apparatus according to claim 1 to 7,
wherein the entrance (44b) comprises a hatch disposed so as to be positioned below the waterline (WL) while the floating body is moored, the hatch being configured such that the submarine (40b) is connectable.

10. The floating type wind turbine generating apparatus according to claim 1 to 7 and 9,
wherein the entrance (44b) is disposed so as to be positioned below the waterline (WL) while the floating body (20) is moored and has a size that allows a submarine (40b) to pass through the entrance (44b), and
wherein a storage room (70) is formed inside the column, the storage room being configured to house the submarine (40b) that has passed through the entrance (44b).

## Patentansprüche

1. Windkraftanlagenvorrichtung (1) vom schwimmenden Typ, umfassend:
einen Schwimmkörper (20), der drei Säulen (22a, 22b, 22c) in Form von quadratischen Prismen und mindestens zwei untere Rümpfe (24), die zwei der drei Säulen verbinden, umfasst, und
eine Windkraftanlage (10), die an einer oberen Fläche von mindestens einer (22a) der drei Säulen angeordnet ist, wobei der Schwimmkörper dazu ausgebildet ist, durch Einspeisen von Ballastwasser in diesen auf einer Wasseroberfläche in einem Zustand festgemacht zu sein, in dem eine Wasserlinie (WL) oberhalb von oberen Flächen der unteren Rümpfe (24) angeordnet ist, und
wobei für eine Seitenfläche von mindestens einer der drei Säulen ein Eingang (44) vorgesehen ist, wobei der Eingang (44) oberhalb eines Verbindungsteils zwischen dem unteren Rumpf (24) und der mindestens einen Säule (22a) angeordnet ist und dazu ausgebildet ist, Zugang zum Inneren der mindestens einen Säule von einem Schiff (40a) oder Unterseeboot (40b) aus zu ermöglichen.

2. Windkraftanlagenvorrichtung vom schwimmenden Typ nach Anspruch 1, wobei der Schwimmkörper (20) einen Wasserspeicherraum (26) innerhalb des Schwimmkörpers umfasst, wobei der Wasserspeicherraum dazu ausgebildet ist, eine gespeicherte Menge des Ballastwassers einzustellen.

3. Windkraftanlagenvorrichtung vom schwimmenden Typ nach Anspruch 2, wobei der Wasserspeicherraum, die innerhalb des Schwimmkörpers vorgesehen ist, in einer Längsrichtung jedes der unteren Rümpfe (24) in mehrere Unterräume (26) unterteilt ist, wobei jeder der Unterräume (26) dazu ausgebildet ist, das Ballastwasser aufzunehmen und abzugeben.

4. Windkraftanlagenvorrichtung vom schwimmenden Typ nach Anspruch 1 bis 3, umfassend:
einen Lageerfassungssensor (56), der dazu ausgebildet ist, eine Lage des Schwimmkörpers (20) zu detektieren, wobei eine Menge des in jedem der Unterräume (26) gespeicherten Ballastwassers basierend auf einem detektierten Wert des Lageerfassungssensors geregelt wird.

5. Windkraftanlagenvorrichtung vom schwimmenden Typ nach Anspruch 1 bis 4, umfassend:
einen Verbindungsweg (54), der innerhalb des Schwimmkörpers (20) vorgesehen ist und dazu ausgebildet ist, eine Verbindung zwischen den drei Säulen (22a, 22b, 22c) zu bilden.

6. Windkraftanlagenvorrichtung vom schwimmenden Typ nach Anspruch 1 bis 5,
wobei jede der drei Säulen (22a, 22b, 22c) mindestens ein mit ihr verbundenes Festmacherseil (34) aufweist, und
wobei sich das mindestens eine Festmacherseil (34) in eine derartige Richtung erstreckt, dass sich das mindestens eine Festmacherseil (34) mit dem unteren Rumpf (24) nicht überkreuzt und sich von den unteren Rümpfen (24) weg erstreckt.

7. Windkraftanlagenvorrichtung vom schwimmenden Typ nach Anspruch 1 bis 6, wobei der Schwimmkörper (20) eine bewegliche Wellenbrecherwand (64) umfasst, die derart angeordnet ist, dass sie den Eingang (44) umgibt.

8. Windkraftanlagenvorrichtung vom schwimmenden Typ nach Anspruch 1 bis 7,
wobei der Eingang (44a) dazu ausgebildet ist, oberhalb der Wasserlinie (WL) angeordnet zu sein, während der Schwimmkörper (20) festgemacht ist,
wobei zwei Vorsprünge (62), die sich in einer senkrechten Richtung erstrecken, an der Seitenfläche der Säule (22a) angeordnet sind, für die der Eingang (44) vorgesehen ist, und
wobei die zwei Vorsprünge (62) mit einem Abstand zwischeneinander angeordnet sind, derart, dass ein Bug des Schiffes (40a) zwischen den Vorsprüngen (62) aufgenommen wird, wobei das Schiff (40a) in einem Zustand ist, in dem ein Ende des Bugs mit der Seitenfläche der Säule in Kontakt steht.

9. Windkraftanlagenvorrichtung vom schwimmenden Typ nach Anspruch 1 bis 7, wobei der Eingang (44b) eine Luke umfasst, die derart angeordnet ist, dass sie unter der Wasserlinie (WL) angeordnet ist, während der Schwimmkörper festgemacht ist, wobei die Luke derart ausgebildet ist, dass das Unterseeboot (40b) andocken kann.

10. Windkraftanlagenvorrichtung vom schwimmenden Typ nach Anspruch 1 bis 7 und 9, wobei der Eingang (44b) derart angeordnet ist, dass er unter der Wasserlinie (WL) angeordnet ist, während der Schwimmkörper (20) festgemacht ist, und eine Größe aufweist, die ermöglicht, dass sich ein Unterseeboot (40b) durch den Eingang (44b) hindurchbewegt, und
wobei ein Aufnahmeraum (70) innerhalb der Säule gebildet ist, wobei der Aufnahmeraum dazu ausgebildet ist, das Unterseeboot (40b) aufzunehmen, das sich durch den Eingang (44b) hindurchbewegt hat.

## Revendications

1. Dispositif générateur d'énergie éolienne de type flottant (1) comprenant :
un corps flottant (20) comprenant trois colonnes (22a, 22b, 22c) ayant une forme de prisme quadratique et au moins deux coques inférieures (24) raccordant deux des trois colonnes ; et
un générateur d'énergie éolienne (10) disposé sur une face supérieure d'au moins l'une (22a) des trois colonnes, dans lequel le corps flottant est configuré pour être amarré sur une surface d'eau dans un état dans lequel une ligne d'eau (WL) est positionnée au-dessus des faces supérieures des coques inférieures (24) en injectant de l'eau de ballastage à l'intérieur ; et
une entrée (44) est prévue pour une face latérale d'au moins l'une des trois colonnes, l'entrée (44) étant disposée au-dessus d'une partie de raccordement entre la coque inférieure (24) et la au moins une colonne (22a), et configurée pour fournir l'accès à l'intérieur de la au moins une colonne depuis un bateau (40a) ou un sous-marin (40b).

2. Dispositif générateur d'énergie éolienne de type flottant selon la revendication 1, dans lequel le corps flottant (20) comprend un espace de stockage d'eau (26) à l'intérieur du corps flottant, l'espace de stockage d'eau étant configuré pour ajuster un volume stocké de l'eau de ballastage.

3. Dispositif générateur d'énergie éolienne de type flottant selon la revendication 2, dans lequel l'espace de stockage d'eau prévu à l'intérieur du corps flottant est divisé en une pluralité de pièces auxiliaires (26) dans une direction longitudinale de chacune des coques inférieures (24), chacune des pièces auxiliaires (26) étant configurée pour faire entrer et décharger l'eau de ballastage.

4. Dispositif générateur d'énergie éolienne de type flottant selon les revendications 1 à 3, comprenant
un capteur de détection d'attitude (56) configuré pour détecter une attitude du corps flottant (20), dans lequel un volume de l'eau de ballastage stockée dans chacune des pièces auxiliaires (26) est contrôlé en fonction d'une valeur détectée du capteur de détection d'attitude.

5. Dispositif générateur d'énergie éolienne de type flottant selon les revendications 1 à 4, comprenant
un chemin de communication (54) prévu à l'intérieur du corps flottant (20) et configuré pour communiquer entre les trois colonnes (22a, 22b, 22c).

6. Dispositif générateur d'énergie éolienne de type flottant selon les revendications 1 à 5, dans lequel chacune des trois colonnes (22a, 22b, 22c) a au moins un câble d'amarrage (34) raccordé à cette dernière, et
dans lequel le au moins un câble d'amarrage (34) s'étend dans une direction telle que le au moins un câble d'amarrage (34) ne croise pas la coque inférieure (24) et s'étend à distance des coques inférieures (24).

7. Dispositif générateur d'énergie éolienne de type flottant selon les revendications 1 à 6, dans lequel le corps flottant (20) comprend une paroi brise-lames mobile (64) disposée afin d'entourer l'entrée (44).

8. Dispositif générateur d'énergie éolienne de type flottant selon les revendications 1 à 7, dans lequel l'entrée (44a) est configurée afin d'être positionnée au-dessus de la ligne d'eau (WL) alors que le corps flottant (20) est amarré,
dans lequel une paire de saillies (62) s'étendant dans une direction verticale est disposée sur la face latérale de la colonne (22a) pour laquelle l'entrée (44) est prévue, et
dans lequel la paire de saillies (62) est agencée avec un intervalle entre chacune d'entre elles de sorte qu'une proue du bateau (40a) est logée entre les saillies (62), le bateau (40a) étant dans un état dans lequel une extrémité de la proue est en contact avec la face latérale de la colonne.

9. Dispositif générateur d'énergie éolienne de type flottant selon les revendications 1 à 7, dans lequel l'entrée (44b) comprend une écoutille disposée afin d'être positionnée au-dessous de la ligne d'eau (WL) alors que le corps flottant est amarré, l'écoutille étant configurée de sorte que le sous-marin (40b) peut être raccordé.

10. Dispositif générateur d'énergie éolienne de type flottant selon les revendications 1 à 7 et 9, dans lequel l'entrée (44b) est disposée afin d'être positionnée au-dessous de la ligne d'eau (WL) alors que le corps flottant (20) est amarré, et a une taille qui permet à un sous-marin (40b) de passer à travers l'entrée (44b), et
dans lequel une pièce de stockage (70) est formée à l'intérieur de la colonne, la pièce de stockage étant configurée pour loger le sous-marin (40b) qui est passé à travers l'entrée (44b).
